# EUROPEAN PATENT SPECIFICATION

(11) **EP 1 846 979 B1**
(45) Date of publication and mention of the grant of the patent: **24.11.2010**
(21) Application number: 06710329.1
(22) Date of filing: 07.02.2006
(51) Int. Cl.: H01M 10/04, H01M 4/66

(54) **HYDROGEN-AIR SECONDARY CELL**
WASSERSTOFF-LUFT-SEKUNDÄRZELLE
ACCUMULATEUR HYDROGENE-AIR

(30) Priority: 08.02.2005 PL 37267805
(43) Date of publication of application: 24.10.2007
(73) Proprietor: CENTRE NATIONAL DE LA RECHERCHE SCIENTIFIQUE (CNRS), 75016 Paris (FR); Poznan University of Technology, 60965 Poznan (PL); Université d'Orleans, 45067 Orleans Cedex 2 (FR)
(72) Inventor: JUREWICZ, Krzysztof, PL-61-873 Poznan (PL); FRACKOWIAK, Elzbieta, PL-61-623 Poznan (PL); BEGUIN, François, F-45160 Olivet (FR)
(74) Representative: Colombet, Alain André
(86) International application number: PCT/IB2006/000227
(87) International publication number: WO 2006/085187

(56) References cited:
- US-A- 4 900 642
- US-A- 4 925 747
- US-A- 5 480 741
- JUREWICZ K ET AL: "Enhancement of reversible hydrogen capacity into activated carbon through water electrolysis" ELECTROCHEMICAL AND SOLID-STATE LETTERS ELECTROCHEM. SOC USA, vol. 4, no. 3, March 2001 (2001-03), pages A27-A29, XP002380089 ISSN: 1099-0062

## Description

The invention relates to a hydrogen-air secondary cell that can be used for supplying electric power to systems of electric vehicles and for portable equipment such as telephones, photographic equipment and laptops.

Hydrogen-air secondary cells produce electric power and heat according to the following reaction:

H₂ + O₂ → H₂O (1)

Therefore they are among the most environment-friendly energy sources, since they make use of oxygen from the air, and only emits water. Unfortunately, application of cells of this type for powering an electric car requires solving substantial technical problems, the most important being as follows:
- the method of transporting gaseous (molecular) hydrogen in the powered vehicle must be completely safe and at the same time with low costs. At the present time, no practical solution has yet been found to this end.
- The catalysts required in the process of electrochemical combustion of hydrogen, facilitating dissociation of its molecules to atoms, are at present expensive, since they are based on precious metals, such as platinum or ruthenium.
- In the cell, the anode part must be separated from the cathode part by a membrane that separates the gases oxygen and hydrogen and is permeable to the ions of the electrolyte. To date the only practical solution proposed in this connection is the use of an extremely expensive separator of the Nafion type, despite extensive research to find a cheaper substitute.
- The water formed as a result of combustion of hydrogen must be continuously removed from the system, most often by thermal evaporation.

The present invention provides a new cell construction, which is based on the reaction of oxidation of hydrogen by the oxygen of the air, and makes it possible to avoid occurrence of the problems detailed above.

This cell is composed of three electrodes operating in an alkaline electrolyte, namely:
- a classical air diffusion electrode
- a carbon electrode adsorbing hydrogen reversibly
- an auxiliary electrode.

During charge of the cell, hydrogen is stored on the carbon electrode as <CH> in the process of cathodic decomposition of water. In this case the carbon electrode and the auxiliary electrode are supplied with current.

During discharge of the cell, the carbon electrode (charged with hydrogen <CH>) interacts with the air diffusion electrode in the production of electrical energy according to the reaction:

<CHₓ> + x/4 O₂ → x/2 H₂O + <C> (2)

The invention relates to a hydrogen-air secondary as defined in claim 1.

It is advantageous if the carbon material is in powdered, fibrous or monolithic form.

It is particularly advantageous if the carbon material is formed from a carbon precursor carbonized in the temperature range from 1000 K to 1400 K and/or is activated by an oxidizing agent at a temperature ranging from 850 K to 1400 K.

It is also advantageous if the auxiliary electrode is made of metallic nickel preferably in the form of gauze.

With the design according to the invention, the following technical and functional effects were obtained:
- the fuel, i.e. hydrogen, is not supplied to the cell continuously, but is produced and stored inside the cell by adsorption on the carbon material during the charging process. Therefore the operation of the cell does not require the use of a hydrogen tank, or of a membrane of the Nafion type,
- the proposed design has the advantage that it becomes possible for the cell to operate without the use of expensive catalysts, because the hydrogen is introduced into the carbon structure in atomic form and so there is no need for dissociation of the molecules through catalytic decomposition in the electrochemical oxidation process,
- absence of the need to remove water from the system. Whereas in the usual fuel cells the water that forms in the reaction of hydrogen combustion must be removed from the system by evaporation at temperatures of 40-100 (low-temperature cells), here it undergoes electrochemical decomposition during charging of the cell,
- charging of the hydrogen electrode is assisted by the third so-called auxiliary electrode.

The object of the invention is presented below in a typical embodiment.

The cell is constructed from two air diffusion electrodes in a parallel arrangement, with a carbon electrode positioned between them and serving for adsorption of hydrogen. The air electrodes are connected together electrically.

The two air diffusion electrodes in this parallel arrangement form the side walls of a cuboid forming an individual cell of an accumulator. Each air electrode is constructed from at least two layers:
- an outer layer having hydrophobic properties which permits easy diffusion of air to the reaction site and at the same time protects against leakage of electrolyte from the cell via the electrode,
- an inner layer with hydrophilic properties, which is therefore well wetted by the electrolyte solution.

Both layers are constructed of carbon materials with a suitable structure, texture and chemical properties for ensuring the required hydrophobic/hydrophilic character of the air diffusion electrode. The hydrophilic layer contains particles of catalyst for lowering the overpotential of oxygen reduction. Good wettability of the inner layer facilitates transport of the hydroxyl ions that form during reduction of the oxygen, into the electrolyte solution and then to the hydrogen electrode (<CH>) where it reacts with the hydrogen, oxidizing it electrochemically, as a result of which water is formed.

For production of the electrode, active carbon powder in the form of a concentrated suspension is applied as a paste to nickel gauze in a defined order to produce the required porous structure: nickel gauze, hydrophilic layer, hydrophobic layer. Optimum absorbability of the individual layers is achieved by selecting active carbon powder with smaller grain size for the hydrophilic layer and correspondingly larger grain size for the hydrophobic layer. In addition, the material of the hydrophobic layer contains an increased amount of a binding additive with a large wetting angle. This can be an aqueous emulsion of Teflon. The hydrophilic layer additionally contains a catalyst that lowers the overpotential of oxygen reduction, e.g. platinum black in an amount up to 1 wt.%.

The two air diffusion electrodes are glued in a housing made of plastic (organic glass, polyethylene or polypropylene) with the nickel gauze on the inside of the cell (the electrolyte side).

During uptake (production) of electrical energy the current collectors of the two air electrodes are connected electrically to the positive pole of the cell.

The hydrogen electrode is made of a carbon material for electrochemical adsorption of hydrogen preferably of microporous material with a large true surface in the range above 1000 m²/g. It had been demonstrated that the presence of ultramicropores with diameter less than 1.0 nm in the active carbon plays an especially beneficial role during electrochemical adsorption of hydrogen between the graphite-like layers. It is then beneficial for the active carbon to contain oxygen functional groups at moderate concentration. Active carbons with a considerable degree of oxidation are not suitable here, especially on account of the reduced electrical conduction.

Active carbon obtained from cellulose fibre, carbonized at a temperature of 1000-1400 K and then activated with carbon dioxide at the same temperature, was chosen as a suitable material of the hydrogen electrode in our cell.

The electrode is made from 4 layers of carbon cloth, pressed into a nickel foil frame. The frame is connected to the current collector, which in turn connects it to the negative pole of the cell. The electromechanical connections are made by welding.

The auxiliary electrode is made of metallic nickel in the form of gauze, perforated foil or sintered nickel. Depending on the construction, it is possible to use two or one auxiliary electrode, which is disposed in the cell between the positive (air) electrodes and the negative (hydrogen) electrode. The current collector of the auxiliary electrode is connected electrically to the auxiliary pole of the cell, which is employed as a positive pole during charging of the hydrogen electrode.

All the electrodes (hydrogen, air and auxiliary) are protected from shorting inside the cell by means of a porous separator that keeps them apart.

The cell is filled at least to the level of the upper edges of the electrodes with aqueous solution of KOH electrolyte at a concentration of 6 mol/dm³.

The electrochemical reactions taking place during charging/discharge of the cell can be summarized as follows:

<CHₓ> + x/4 O₂ ←→ <C> + x/2 H₂O (3)

The charging process occurs on the left side of the equation, and the discharge process on the right side.

The charging process only relates to the hydrogen electrode, because the air diffusion electrode does not require charging to start working (discharge) in the cell. This is because it takes the required quantity of oxygen continuously from the air (a so-called air-breathing electrode).

Charging of the (carbon) hydrogen electrode requires it to be connected to the negative pole of an external source of current. The other (positive) pole of the source of current is connected to the pole of the auxiliary electrode in a cell made of nickel.

The following reactions of reduction of water take place during charging of the hydrogen electrode:

H₂O + e⁻ → H + OH⁻ (4)

The atomic hydrogen that forms during reaction (4) can be adsorbed on the carbon according to reaction (5):

C + H → CH_{ad} (5)

and/or recombined to molecular form:

CH_{ad} + H₂O + e⁻ → H₂ + OH⁻ + C (6)

2H → H₂ (7)

CH_{ad} + CH_{ad} → H₂ + 2C (8)

At the same time, oxidation of the OH⁻ ions takes place on the auxiliary electrode, with release of gaseous oxygen to atmosphere according to reaction (9):

4 OH⁻ → 2 H₂O + 4 e⁻ + O₂ (9)

Charging is carried out using a defined current density selected in the range from 0.05 to 2 A/g, and calculated in relation to the mass of the carbon material used in constructing the carbon electrode, taking into account the excess charge relative to the nominal capacity of the hydrogen electrode.

The charging voltage with a nickel-foil auxiliary electrode without catalyst is approx. 2.5 V, and its increase during charging is negligibly small. The cell is ready for discharge (i.e. for use) immediately after completion of charging.

When consuming electrical energy, the air electrode is the positive pole and the hydrogen electrode made of carbon material is the negative pole. The load capacity of the cell depends on the properties of the air electrode, in particular on the capabilities of the catalyst used (its type and amount). Brief consumption of large currents is possible provided that the voltage on an individual cell does not fall below a defined value, e.g. 0.25 V/cell.

During the charging process, the auxiliary electrode serves for charging the hydrogen electrode and is connected to the positive pole, whereas when taking current from the cell, hydrogen is oxidized by means of the air electrode.

## Claims

1. Hydrogen-air secondary cell, which contains an electrode made of a material capable of a high hydrogen sorption capacity through the electrochemical decomposition of water, connected to the negative pole, disposed between conventional air diffusion electrodes, with at least one auxiliary electrode with lowered oxygen release overpotential being positioned between the air electrodes a id the hydrogen sorption electrode and connected electrically to an auxiliary pole of the cell and charging the cell, the electrodes being kept apart by a separator, wherein the electrode that is capable of reversible sorption of hydrogen is made of a carbon material which is a carbon cloth made of porous carbon, produced from cellulose fibre in a carbonization process and then activation preferably with carbon dioxide, having a true surface of at least 1000 m²/g and micropores less than 1.0 nm in diameter.

2. Hydrogen-air secondary cell according to claim 1, wherein the carbon material is in powder, fibrous or monolithic form.

3. Hydrogen-air secondary cell according to claim 1 or 2, wherein the carbon material is produced from a carbon precursor carbonized in the temperature range from 1000 K to 1400 K and/or activated with an oxidizing agent at a temperature ranging from 850 K to 1400 K.

4. Hydrogen-air secondary cell according to claim 1, wherein the auxiliary electrode is made of metallic nickel preferable in the form of gauze.

## Patentansprüche

1. Wasserstoff-Luft-Sekundärzelle, die eine Elektrode enthält, die aus einem Material besteht, das zu einer hohen Wasserstoffsorptionskapazität durch die elektrochemische Zersetzung von Wasser in der Lage ist, die mit dem negativen Pol verbunden ist und zwischen herkömmlichen Luftdiffusionselektroden angeordnet ist, wobei mindestens eine Hilfselektrode mit verringerter Sauerstofffreisetzungsüberspannung zwischen den Luftelektroden und der Wasserstoffsorptionselektrode angeordnet ist und mit einem Hilfspol der Zelle elektrisch verbunden ist und die Zelle auflädt, wobei die Elektroden durch einen Scheider auseinander gehalten werden, wobei die Elektrode, die zu einer reversiblen Sorption von Wasserstoff in der Lage ist, aus einem Kohlenstoffmaterial besteht, das ein Kohlenstoffgewebe, das aus porösem Kohlenstoff besteht, der aus einer Cellulosefaser in einem Verkohlungsprozess und dann Aktivierung vorzugsweise mit Kohlenstoffdioxid hergestellt wird, mit einer tatsächlichen Oberfläche von mindestens 1000 m²/g und Mikroporen von weniger als 1,0 nm im Durchmesser ist.

2. Wasserstoff-Luft-Sekundärzelle nach Anspruch 1, wobei das Kohlenstoffmaterial in Pulverform, Faserform oder monolithischer Form vorliegt.

3. Wasserstoff-Luft-Sekundärzelle nach Anspruch 1 oder 2, wobei das Kohlenstoffmaterial aus einem Kohlenstoffvorläufer hergestellt ist, der im Temperaturbereich von 1000 K bis 1400 K verkohlt wird und/oder mit einem Oxidationsmittel bei einer Temperatur im Bereich von 850 K bis 1400 K aktiviert wird.

4. Wasserstoff-Luft-Sekundärzelle nach Anspruch 1, wobei die Hilfselektrode aus metallischem Nickel vorzugsweise in Form von Gewebe besteht.

## Revendications

1. Accumulateur hydrogène-air qui contient une électrode constituée d'un matériau apte à présenter une haute capacité de sorption de l'hydrogène par la décomposition électrochimique de l'eau, reliée au pôle négatif, disposée entre des électrodes classiques de diffusion d'air, au moins une électrode auxiliaire à surpotentiel de libération d'oxygène réduit étant placée entre les électrodes d'air et l'électrode de sorption d'hydrogène et reliée électriquement à un pôle auxiliaire de l'accumulateur et chargeant l'accumulateur, les électrodes étant maintenues séparées par un séparateur, dans lequel l'électrode apte à opérer une sorption réversible de l'hydrogène est réalisée dans n matériau carboné qui est un tissu de carbone constitué de carbone poreux, produit à partir de fibre de cellulose dans un procédé de carbonisation suivi d'une activation effectuée de préférence au dioxyde de carbone, ayant une surface vraie d'au moins 1 000 m²/g et des micropores d'un diamètre inférieur à 1,0 nm.

2. Accumulateur hydrogène-air selon la revendication 1, dans lequel le matériau carboné se présente sous une forme poudreuse, fibreuse ou monolithique.

3. Accumulateur hydrogène-air selon la revendication 1 ou 2, dans lequel le matériau carboné est produit à partir d'un précurseur de carbone carbonisé dans une plage de température de 1 000 K à 1 400 K et/ou activé avec un agent oxydant à une température allant de 850 K à 1 400 K.

4. Accumulateur hydrogène-air selon la revendication 1, dans lequel l'électrode auxiliaire est constituée d'un nickel métallique se présentant de préférence sous forme de gaze.
